(19) Europäisches Patentamt

European Patent Office

Office européen des brevets

(11) **EP 4 141 494 A1**

## (12) EUROPEAN PATENT APPLICATION

(43) Date of publication:
**01.03.2023 Bulletin 2023/09**

(21) Application number: **21193619.0**

(22) Date of filing: **27.08.2021**

(51) International Patent Classification (IPC):
***G01V 8/20*** *(2006.01)*

(52) Cooperative Patent Classification (CPC):
**G01V 8/20**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Pepperl+Fuchs SE**
**68307 Mannheim (DE)**

(72) Inventors:
• **KAI, Ng Jin**
**12277 Berlin (DE)**

• **RATHINESAN, Udhayakumar**
**12277 Berlin (DE)**
• **YUAN, Tan Jing**
**12277 Berlin (DE)**
• **EGGELING, Markus**
**12277 Berlin (DE)**

(74) Representative: **Fischer, Uwe**
**Patentanwalt**
**Moritzstraße 22**
**13597 Berlin (DE)**

## (54) LIGHT CURTAIN DEVICE AND METHOD

(57) An exemplary embodiment of the present invention relates to a light curtain device (LC). A control unit is configured to carry out a collision detection procedure (110) and a definition procedure (120) for defining at least one detection step with respect to a selected surveillance channel.

Fig.2

**Description**

Background of the invention

A light curtain device comprising a plurality of radiation emitters for generating a light curtain is described for instance in Chinese Patent Application CN 203877712 U.

Surveillance channels within the same light curtain device may cause "inter-device" interference problems that impairs the device's performance. For instance, if radiation from one surveillance channel falls on a detector of another surveillance channel, object detection may fail. More specifically, if an object interrupts one of the surveillance channels and should therefore be detected, but the corresponding detector of the surveillance channel is illuminated by the emitter of another surveillance channel, the object may remain undetected.

Objective of the present invention

An objective of the present invention is to propose a light curtain device which is optimized with regard to above described "inter-device" interference problem.

A further objective of the present invention is to provide a method for operating a light curtain device that mitigates the risk of failures caused by "inter-device" interference problems.

Brief summary of the invention

An embodiment of the present invention relates to a light curtain device comprising a plurality of radiation emitters, a plurality of detectors, and a control unit which is configured to control the emitters and evaluate the detection signals of the detectors, wherein each of the emitters forms a surveillance channel together with an individually assigned detector of said plurality of detectors. The control unit is configured to carry out a collision detection procedure for a selected surveillance channel, the collision detection procedure comprising the steps of: activating the emitter of the selected surveillance channel and deactivating all other emitters, and determining whether - in addition to the detector of the selected surveillance channel - one or more other detectors, hereinafter referred to as affected detectors, generate a detection signal in response to the radiation generated by the emitter of the selected surveillance channel, deactivating the emitter of the selected surveillance channel, and determining whether - in addition to the emitter of the selected surveillance channel - one or more emitters of other surveillance channels, hereinafter referred to as affecting emitters, are capable of triggering a detection signal in the detector of the selected surveillance channel, and considering those surveillance channels that comprise an affected detector and/or an affecting emitter as colliding channels and the remaining other surveillance channels as collision-free channels with respect to the selected surveillance channel. The control unit is further configured to carry out a definition procedure for defining at least one detection step with respect to the selected surveillance channel, said definition procedure comprising the step of assigning one or more of the collision-free channels to the selected surveillance channel in order to define said at least one detection step, wherein said at least one detection step defines the simultaneous activation of the selected surveillance channel and the assigned one or more collision-free channels.

The control unit is preferably configured to carry out said collision detection procedure for each of the surveillance channels, thereby determining colliding and collision-free channels for each of the surveillance channels.

Said step of assigning collision-free channels to the selected surveillance channel is preferably restricted to collision-free channels that are also collision-free with respect to one another.

The control unit is preferably configured to carry out said collision detection procedure for each of the surveillance channels and define at least one detection step per surveillance channel.

For at least one selected surveillance channel, said step of assigning collision-free channels preferably includes defining at least two different detection steps, wherein said at least two different detection steps differ in the assignment of collision-free channels to the selected surveillance channel, and wherein each of said at least two different detection steps only contains collision-free channels that are also collision-free with respect to one another.

Said step of assigning collision-free channels to the selected surveillance channel preferably includes defining a detection step that includes the maximum number of collision-free channels that are also collision-free with respect to one another.

The control unit is preferably configured to generate a sequence of detection steps by selecting at least one of the detection steps that were previously determined during the collision detection procedure, per surveillance channel, and stringing the selected detection steps together.

The control unit preferably evaluates different combinations of previously defined detection steps in order to determine a sequence where the surveillance channels are activated equally over time in each cycle.

The control unit preferably evaluates different combinations of previously defined detection steps in order to determine a sequence where the number of activated surveillance channels and assigned collision-free channels is maximal.

The light curtain device may comprise two or more light curtain elements that each comprise a subgroup of said plurality of radiation emitters and a subgroup of said plurality of detectors. In the latter embodiment, the control unit preferably controls the radiation emitters and detectors of all of said light curtain elements as described above.

The control unit may be configured to carry out an object detection procedure which comprises the steps of activating the surveillance channels according to said sequence of detection steps, and evaluating the detection signals and generating an object detection signal if - during any of the detection steps of said sequence - the activated surveillance channel or one or more of the assigned activated collision-free channels is interrupted.

Furthermore, the control unit may be configured to carry out said collision detection procedure for each of the surveillance channels in order to generate a collision table that lists the colliding channels and the collision-free channels with respect to each selected surveillance channel.

The control unit may be configured to generate a preliminary list of collision-free detection steps and to ignore or discard all entries of the preliminary list that define subgroups of surveillance channels that are part of a corresponding larger group of surveillance channels according to another entry of the preliminary list, thereby forming a final list of collision-free detection steps.

The control unit may be configured to carry out a sequencing procedure comprising the steps of generating a sequence of detection steps by picking at least one of the above detection steps for each selected surveillance channel from the preliminary or final list of collision-free detection steps, and stringing the selected detection steps together.

The control unit may be configured to start an initialization process after entry into service and before first normal operation, the initialization process comprising the collision detection procedure, the definition procedure and a sequencing procedure in which a sequence of detection steps is generated.

Another embodiment of the present invention relates to a method of operating a light curtain device comprising a plurality of radiation emitters, a plurality of detectors, and a control unit which controls the emitters and evaluates the detection signals of the detectors, wherein each of the emitters forms a surveillance channel together with an individually assigned detector of said plurality of detectors. The control unit carries out a collision detection procedure for a selected surveillance channel, the collision detection procedure comprising the steps of: activating the emitter of the selected surveillance channel and deactivating all other emitters, and determining whether - in addition to the detector of the selected surveillance channel - one or more other detectors, hereinafter referred to as affected detectors, generate a detection signal in response to the radiation generated by the emitter of the selected surveillance channel, deactivating the emitter of the selected surveillance channel, and determining whether - in addition to the emitter of the selected surveillance channel - one or more emitters of other surveillance channels, hereinafter referred to as affecting emitters, are capable of triggering a detection signal in the detector of the selected surveillance channel, and considering those surveillance channels that comprise an affected detector and/or an affecting emitter as colliding channels and the remaining other surveillance channels as collision-free channels with respect to the selected surveillance channel. Further, the control unit carries out a definition procedure for defining at least one detection step with respect to the selected surveillance channel, said definition procedure comprising the step of assigning one or more of the collision-free channels to the selected surveillance channel in order to define said at least one detection step, wherein said at least one detection step defines the simultaneous activation of the selected surveillance channel and the assigned one or more collision-free channels.

All features as described above in connection with the light curtain device, in particular regarding the operation of the control unit, can also be included in said method of operating a light curtain device. In other words, all features listed above and in the dependent claims that refer to the light curtain device, may also be considered as disclosed subject matter regarding the method of operating a light curtain device.

Brief description of the drawings

In order that the manner, in which the above-recited and other advantages of the invention are obtained, will be readily understood, a more particular description of the invention briefly described above will be rendered by reference to specific embodiments thereof, which are illustrated in the appended figures. Understanding that these figures depict only typical embodiments of the invention and are therefore not to be considered limiting of its scope, the invention will be described and explained with additional specificity and detail by the use of the accompanying drawings in which

Figure 1    illustrates an exemplary embodiment of a light curtain device according to the present invention,

Figure 2    visualizes the problem of inter-device interference,

Figure 3    shows a block diagram of a method of generating collision-free detection steps and sequences of collision-free detection steps, and

Figure 4    illustrates another exemplary embodiment of a light curtain device according to the present invention.

Detailed description of the preferred embodiments

The preferred embodiments of the present invention will be best understood by reference to the drawings, wherein identical or comparable parts are designated by the same reference signs throughout.

It will be readily understood that the parameters of the embodiments of the present invention, as generally described herein, could vary in a wide range. Thus, the following more detailed description of exemplary embodiments of the present invention, is not intended to limit the scope of the invention but is merely representative of presently preferred embodiments of the invention.

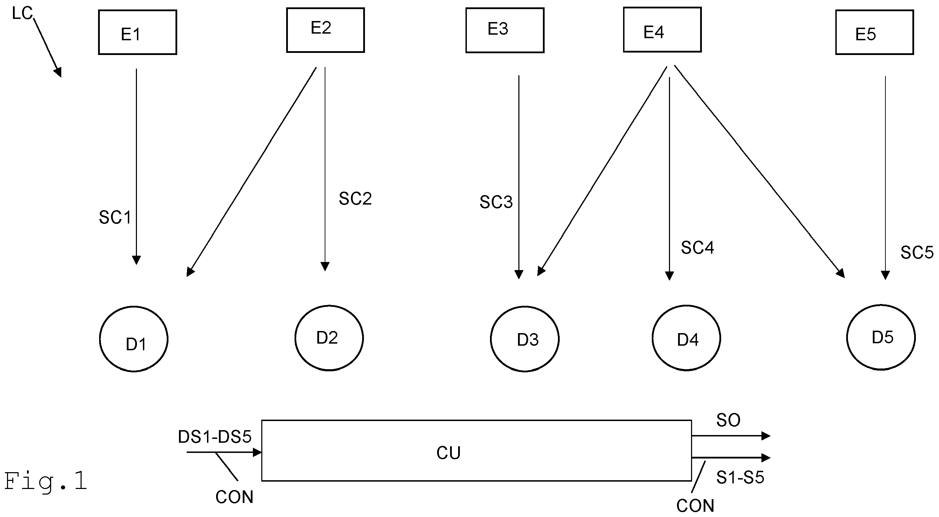

Figure 1 shows an exemplary embodiment of a light curtain device LC according to the present invention.

The exemplary light curtain device LC of Figure 1 comprises a plurality of radiation emitters E1-E5 and a plurality of detectors D1-D5. Each of the emitters E1-E5 is individually assigned to one of the detectors D1-D5 such that five separate surveillance channels SC1(E1, D1), SC2(E2, D2), SC3(E3, D3) SC4(E4, D4) and SC5(E5, D5) are available during operation.

A control unit CU is connected to the emitters E1-E5 and the detectors D1-D5 via connections CON (wireless or cable), which are just partly depicted in Figure 1. Via these connections, activation signals S1-S5 can be transmitted to the emitters E1-E5 in order to activate the respective surveillance channels SC1-SC5. Furthermore, the connections allow the control unit CU to receive corresponding detection signals DS1-DS5 from the detectors D1-D5.

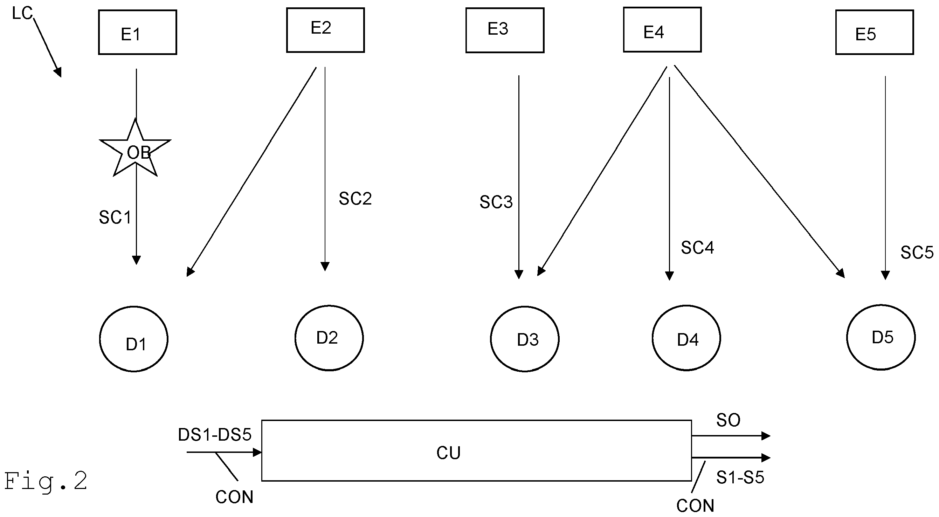

In the exemplary embodiment of Figure 1, some of the surveillance channels SC1-SC5 interfere. For instance, a first detector D1 that is assigned to a first emitter E1 and a first surveillance channel SC1, may be affected by radiation of a second emitter E2 of a second surveillance channel SC2. Therefore, the surveillance channels SC1 and SC2 are colliding channels and should not operate simultaneously. The reason is visualized in Figure 2.

Figure 2 shows the light curtain device LC of Figure 1 in case that an object OB interrupts the first surveillance channel SC1. If the first surveillance channel SC1 is operated and the second surveillance channel SC2 is inactive, the light curtain device LC works accurately because the first detector D1 fails to provide the expected detection signal DS1 and the control unit CU may generate a corresponding object detection signal SO.

However, if both the first and second surveillance channel SC1 and SC2 operate simultaneously, the first detector falsely provides the detection signal DS1, namely in response to the radiation from the second emitter E2, and the control unit therefore fails to generate the required object detection signal SO.

Therefore, the control unit CU of Figure 1 is configured to avoid the simultaneous activation of colliding surveillance channels SC1-SC5. This objective could easily be achieved by activating the surveillance channels SC1-SC5 only one by one, however, the resulting time delay would deteriorate the protection level of the light curtain device LC significantly. Thus, the control unit CU of Figure 1 is configured differently.

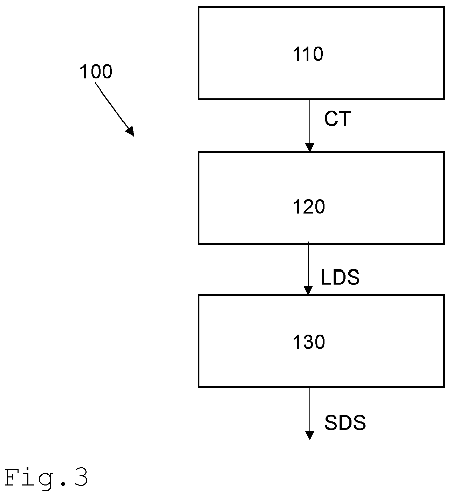

At least after entry into service and before the first normal operation, the control unit CU starts an initialization process 100 (see Figure 3) in which a sequence SDS of detection steps is determined. Each detection step includes the simultaneous activation of collision-free surveillance channels SC1-SC5, only. The subsequent normal operation is then carried out in cycles in which the collision-free detection steps are carried out according to said sequence SDS of detection steps.

Figure 3 shows an exemplary embodiment of the initialization process 100 in a block diagram.

The initialization process 100 includes a collision detection procedure 110 for generating a collision table CT. The collision detection procedure 110 is preferably carried out for each one of the surveillance channels SC1-SC5.

The collision detection procedure 110 is carried out for each surveillance channel on a one-by-one basis. Once a surveillance channel is selected for the collision detection procedure 110, the selected surveillance channel is analyzed with respect to collisions. The selected surveillance channel can also be referred to as surveillance channel under investigation.

The control unit then generates the collision table CT which lists colliding and collision-free channels for each of the surveillance channels SC1-SC5.

In order to determine whether the emitter of the selected channel affects other detectors than the assigned one (the one belonging to the selected surveillance channel), the emitter of the selected channel is activated and all other emitters are deactivated. Then the control unit CU determines whether - in addition to the detector of the selected channel - one or more other detectors, hereinafter referred to as affected detectors, generate a detection signal in response to the radiation generated by the emitter of the selected channel.

In order to determine whether the detector of the selected channel is affected by other emitters than the assigned one (the one belonging to the selected surveillance channel), all other emitters are activated one by one. This allows the control unit to determine whether - in addition to the emitter of the selected channel - one or more other emitters, hereinafter referred to as affecting emitters, trigger a detection signal in the detector of the selected channel.

Those of the non-selected surveillance channels that comprise an affected detector and/or an affecting emitter are considered as colliding channels. The remaining other non-selected surveillance channels are considered as collision-free channels with respect to the selected surveillance channel.

For the exemplary embodiment of Figure 1, the control unit generates the following collision table CT that lists the colliding channels and the collision-free channels with respect to each selected surveillance channel (surveillance channel under investigation):

| Selected surveillance channel (channel under investigation) | Collision-free channels | Colliding channels |
|---|---|---|
| SC1 | SC3, SC4, SC5 | SC2 |
| SC2 | SC3, SC4, SC5 | SC1 |
| SC3 | SC1, SC2, SC5 | SC4 |
| SC4 | SC1, SC2 | SC3, SC5 |
| SC5 | SC1, SC2, SC3 | SC4 |

In a second phase of the initialization process, the control unit CU carries out definition procedure 120 and generates a list LDS of possible detection steps. The control unit CU may for instance define at least one detection step with respect to each of the previously selected surveillance channels (i.e. for each of the previous surveillance channels under investigation).

To this end, the control unit CU may assign one or more of the collision-free channels to each one of the surveillance channels in order to define the corresponding detection steps. Each detection step then defines the simultaneous activation of the selected surveillance channel and the assigned one or more collision-free channels.

In order to avoid that assigned collision-free channels collide among each other, the assignment is preferably restricted to those collision-free channels that are also collision-free among each other.

For the exemplary embodiment of Figure 1, the control unit may generate the following preliminary list of detection steps which fulfil the requirements described above:

| Selected surveillance channel | Detection step | Surveillance channels SC1-SC5 (selected and assigned) |
|---|---|---|
| SC1 | D1.1 | SC1, SC3 |
| SC1 | D1.2 | SC1, SC4 |
| SC1 | D1.3 | SC1, SC5 |
| SC1 | D1.4 | SC1, SC3, SC5 |
|  |  |  |
| SC2 | D2.1 | SC2, SC3 |
| SC2 | D2.2 | SC2, SC4 |
| SC2 | D2.3 | SC2, SC5 |
| SC2 | D2.4 | SC2, S3, SC5 |
|  |  |  |
| SC3 | D3.1 | SC1, SC3 |
| SC3 | D3.2 | SC2, SC3 |
| SC3 | D3.3 | SC3, SC5 |
| SC3 | D3.4 | SC1, SC3, SC5 |
| SC3 | D3.5 | SC2, SC3, SC5 |
|  |  |  |
| SC4 | D4.1 | SC1, SC4 |
| SC4 | D4.2 | SC2, SC4 |

The control unit preferably ignores or discards all entries of the preliminary list that define subgroups of a larger group. For instance, entries D1.1 and D1.3 define subgroups of entry D1.4 and can be ignored.

After eliminating subgroup entries, the resulting final list LDS of detection steps reads as follows:

| Selected surveillance channel | Detection step | Surveillance channels SC1-SC5 (selected and assigned) |
|---|---|---|
| SC1 | D1.2 | SC1, SC4 |
| SC1 | D1.4 | SC1, SC3, SC5 |
| SC2 | D2.3 | SC2, SC4 |
| SC2 | D2.4 | SC2, S3, SC5 |
| SC3 | D3.4 | SC1, SC3, SC5 |
| SC3 | D3.5 | SC2, SC3, SC5 |
| SC4 | D4.1 | SC1, SC4 |
| SC4 | D4.2 | SC2, SC4 |

In a subsequent sequencing procedure 130, the control unit CU generates a sequence SDS of detection steps. To this end, the control unit CU may pick at least one of the above detection steps for each selected surveillance channel, and string the selected detection steps together.

For instance, the sequence SDS could read as follows:

$$SDS = D1.2, \; D2.3, \; D3.4, \; D4.1$$

The above sequence SDS guaranties that each surveillance channel is activated at least once during each cycle. However, some surveillance channels SC1-SC5 like SC1 and SC4 would be activated more often than the surveillance channels SC2 and SC5.

The control unit CU preferably optimizes the sequence SDS of detection steps such that all of the surveillance channels SC1-SC5 are activated equally or as equally as possible over time in each cycle. An optimized sequence SDS can read as follows, for instance:

$$SDS = D1.2, \; D1.4, \; D2.3, \; D2.4, \; D3.4, \; D3.5, \; D4.1, \; D4.2$$

In this sequence, each surveillance channel is activated four times in each cycle.

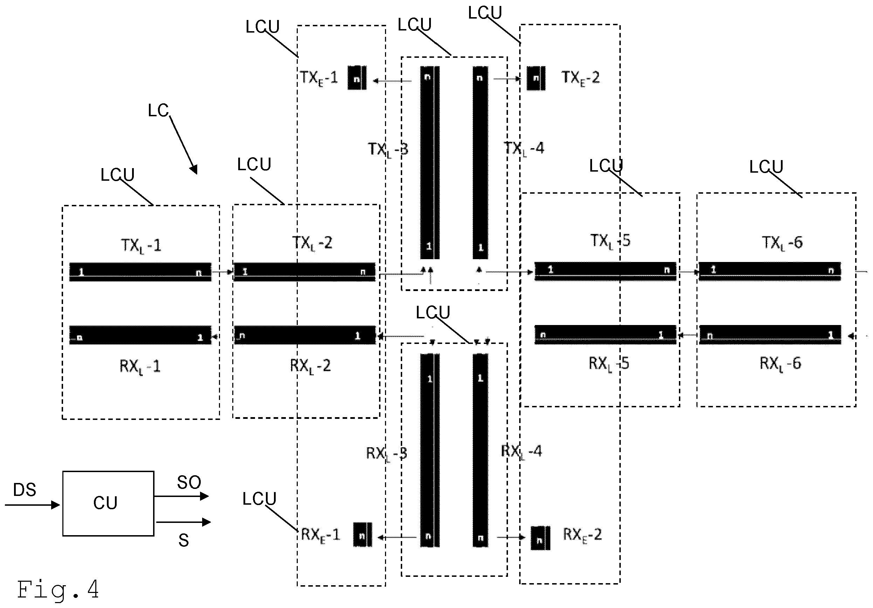

Figure 4 depicts an exemplary embodiment of a light curtain device LC that comprises a plurality of light curtain elements LCU that are connected directly or indirectly via intermediate other light curtain elements LCU with a control unit.

Each light curtain element LCU comprises an emitter subgroup TXL-1, TXL-2, TXL-3, TXL-4, TXL-5, TXL-6, TXE-1 or TXE-2, and an individually assigned detector subgroup RXL-1, RXL-2, RXL-3, RXL-4, RXL-5, RXL-6, RXE-1 or RXE-2, respectively.

The control unit CU is connected to all of the emitters and detectors in order to send activation signals S to the emitters and receive corresponding detection signals DS from the detectors.

The control unit CU controls the radiation emitters and detectors of all of said light curtain elements LCU as explained above in an exemplary fashion in connection with Figures 1-3.

The various embodiments and aspects of embodiments of the invention disclosed herein are to be understood not only in the order and context specifically described in this specification, but to include any order and any combination thereof. Whenever the context requires, all words used in the singular number shall be deemed to include the plural and vice versa. Whenever the context requires, all options that are listed with the word "and" shall be deemed to include the word "or" and vice versa, and any combination thereof.

In the drawings and specification, there have been disclosed a plurality of embodiments of the present invention. The applicant would like to emphasize that each feature of each embodiment may be combined with or added to any other of the embodiments in order to modify the respective embodiment and create additional embodiments. These additional embodiments form a part of the present disclosure and, therefore, the applicant may file further patent claims regarding these additional embodiments at a later stage of the prosecution.

Further, the applicant would like to emphasize that each feature of each of the following dependent claims may be combined with any of the present independent claims as well as with any other (one ore more) of the present dependent claims (regardless of the present claim structure). Therefore, the applicant may direct further patent claims towards other claim combinations at a later stage of the prosecution. For instance, the method claim 14 may comprise any features disclosed in claims 2-13.

**Claims**

1. Light curtain device (LC) comprising a plurality of radiation emitters (E1-E5), a plurality of detectors (D1-D5), and a control unit (CU) which is configured to control the emitters and evaluate the detection signals (DS1-DS5) of the detectors, wherein each of the emitters forms a surveillance channel (SC1-SC5) together with an individually assigned detector of said plurality of detectors,

   **characterized in that**
   the control unit is configured to carry out a collision detection procedure (110) for a selected surveillance channel, the collision detection procedure comprising the steps of:

   - activating the emitter of the selected surveillance channel and deactivating all other emitters, and determining whether - in addition to the detector of the selected surveillance channel - one or more other detectors, hereinafter referred to as affected detectors, generate a detection signal in response to the radiation generated by the emitter of the selected surveillance channel,
   - deactivating the emitter of the selected surveillance channel, and determining whether - in addition to the emitter of the selected surveillance channel - one or more emitters of other surveillance channels, hereinafter referred to as affecting emitters, are capable of triggering a detection signal in the detector of the selected surveillance channel, and
   - considering those surveillance channels that comprise an affected detector and/or an affecting emitter as colliding channels and the remaining other surveillance channels as collision-free channels with respect to the selected surveillance channel, and

   the control unit is further configured to carry out a definition procedure (120) for defining at least one detection step with respect to the selected surveillance channel, said definition procedure comprising the step of assigning one or more of the collision-free channels to the selected surveillance channel in order to define said at least one detection step, wherein said at least one detection step defines the simultaneous activation of the selected surveillance channel and the assigned one or more collision-free channels.

2. Light curtain device (LC) according to claim 1 wherein the control unit is configured to carry out said collision detection procedure for each of the surveillance channels, thereby determining colliding and collision-free channels for each of the surveillance channels.

3. Light curtain device (LC) according to any of the preceding claims wherein
   said step of assigning collision-free channels to the selected surveillance channel is restricted to collision-free channels that are also collision-free with respect to one another.

4. Light curtain device (LC) according to any of the preceding claims wherein
   the control unit is configured to carry out said collision detection procedure for each of the surveillance channels and define at least one detection step per surveillance channel.

5. Light curtain device (LC) according to any of the preceding claims wherein

   - for at least one selected surveillance channel, said step of assigning collision-free channels includes defining at least two different detection steps,
   - wherein said at least two different detection steps differ in the assignment of collision-free channels to the selected surveillance channel, and
   - wherein each of said at least two different detection steps only contains collision-free channels that are also collision-free with respect to one another.

6. Light curtain device (LC) according to any of the preceding claims wherein

said step of assigning collision-free channels to the selected surveillance channel includes defining a detection step that includes the maximum number of collision-free channels that are also collision-free with respect to one another.

7. Light curtain device (LC) according to any of the preceding claims wherein the control unit is configured to generate a sequence of detection steps (SDS) by

- selecting at least one of the detection steps that were previously determined during the collision detection procedure, per surveillance channel, and
- stringing the selected detection steps together.

8. Light curtain device (LC) according to any of the preceding claims wherein the control unit evaluates different combinations of previously defined detection steps in order to determine a sequence where the surveillance channels are activated equally over time in each cycle.

9. Light curtain device (LC) according to any of the preceding claims wherein the control unit evaluates different combinations of previously defined detection steps in order to determine a sequence where the number of activated surveillance channels and assigned collision-free channels is maximal.

10. Light curtain device (LC) according to any of the preceding claims

- wherein the light curtain device (LC) comprises two or more light curtain elements (LCU) that each comprise a subgroup of said plurality of radiation emitters and a subgroup of said plurality of detectors, and
- wherein the control unit controls the radiation emitters and detectors of all of said light curtain elements as defined above.

11. Light curtain device (LC) according to any of the preceding claims, wherein the control unit is configured to carry out an object detection procedure which comprises the steps of

- activating the surveillance channels according to said sequence of detection steps, and
- evaluating the detection signals and generating an object detection signal (SO) if - during any of the detection steps of said sequence - the activated surveillance channel or one or more of the assigned activated collision-free channels is interrupted.

12. Light curtain device (LC) according to any of the preceding claims,

- wherein the control unit is configured to carry out said collision detection procedure for each of the surveillance channels in order to generate a collision table (CT) that lists the colliding channels and the collision-free channels with respect to each selected surveillance channel, and/or
- wherein the control unit is configured to generate a preliminary list of collision-free detection steps and to ignore or discard all entries of the preliminary list that define subgroups of surveillance channels that are part of a corresponding larger group of surveillance channels according to another entry of the preliminary list, thereby forming a final list of collision-free detection steps (LDS), and/or
- wherein the control unit CU is configured to carry out a sequencing procedure (130) comprising the steps of generating a sequence (SDS) of detection steps by picking at least one of the above detection steps for each selected surveillance channel from the preliminary or final list of collision-free detection steps (LDS), and stringing the selected detection steps together.

13. Light curtain device (LC) according to any of the preceding claims, wherein the control unit is configured to start an initialization process after entry into service and before first normal operation, the initialization process comprising the collision detection procedure, the definition procedure and a sequencing procedure (130) in which a sequence (SDS) of detection steps is generated.

14. Method of operating a light curtain device (LC) comprising a plurality of radiation emitters, a plurality of detectors, and a control unit which controls the emitters and evaluates the detection signals of the detectors, wherein each of the emitters forms a surveillance channel together with an individually assigned detector of said plurality of detectors. The control unit carries out a collision detection procedure for a selected surveillance channel, the collision detection procedure comprising the steps of: activating the emitter of the selected surveillance channel and deactivating all other emitters, and determining whether - in addition to the detector of the selected surveillance channel - one or more other detectors, hereinafter referred to as affected detectors, generate a detection signal in response to the radiation generated by the emitter of the selected surveillance channel, deactivating the emitter of the selected surveillance channel, and determining whether - in addition to the emitter of the selected surveillance channel - one or more emitters of other surveillance channels, hereinafter referred to as affecting emitters, are capable of triggering a detection signal in the detector of the selected surveillance channel, and considering those surveillance channels that comprise an affected detector and/or an affecting emitter as colliding channels and the remaining other surveillance channels as collision-free channels with respect to the selected surveillance channel. Further, the control unit carries out a definition procedure for defining at least one detection step with respect to the selected surveillance channel, said definition procedure comprising the step of assigning one or more of the collision-free channels to the selected surveillance channel in order to define said at least one detection step, wherein said at least one detection step defines the simultaneous activation of the selected surveillance channel and the assigned one or more collision-free channels.

15. Method of claim 14 wherein the method comprises one or more of the features described in claims 1-13.

Fig.1

EP 4 141 494 A1

LC

| E1 | | E2 | | E3 | | E4 | | E5 |

OB

SC1    SC2    SC3    SC4    SC5

D1    D2    D3    D4    D5

Fig.2

DS1-DS5 → | CU | → SO

CON                    → S1-S5

CON

EP 4 141 494 A1

100

```
┌─────────────────┐
│       110       │
└─────────────────┘
         │
         ▼  CT
┌─────────────────┐
│       120       │
└─────────────────┘
         │
         ▼  LDS
┌─────────────────┐
│       130       │
└─────────────────┘
         │
         ▼  SDS
```

Fig.3

Fig.4

**European Patent Office**
Europäisches Patentamt
European Patent Office
Office européen des brevets

# EUROPEAN SEARCH REPORT

Application Number

**EP 21 19 3619**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/214136 A1 (SCHOENLEITNER ARNOLD [AT] ET AL) 22 August 2013 (2013-08-22) * abstract; claims 1,3,4,9; figures 1,2 * * paragraphs [0016], [0026], [0034], [0039], [0040] * | 1-15 | INV. G01V8/20 |
| X | US 2014/091898 A1 (BURGER JURGEN [DE] ET AL) 3 April 2014 (2014-04-03) * abstract; claim 1; figure 1 * * paragraph [0040] * | 1-9,11, 14,15 | |
| X | US 2013/221204 A1 (MUELLER BERNHARD [DE] ET AL) 29 August 2013 (2013-08-29) * abstract; claim 1; figures 1,3,4 * * paragraphs [0014], [0047] * | 1-11,14, 15 | |

TECHNICAL FIELDS
SEARCHED (IPC)

G01V

The present search report has been drawn up for all claims

| Place of search | Date of completion of the search | Examiner |
|---|---|---|
| The Hague | 28 January 2022 | Fernandes, Paulo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 4 141 494 A1

## ANNEX TO THE EUROPEAN SEARCH REPORT
## ON EUROPEAN PATENT APPLICATION NO.

EP 21 19 3619

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2022

| Patent document cited in search report | | | Publication date | Patent family member(s) | | | Publication date |
|---|---|---|---|---|---|---|---|
| US 2013214136 | A1 | | 22-08-2013 | DE | 102012101369 | A1 | 22-08-2013 |
| | | | | EP | 2631681 | A2 | 28-08-2013 |
| | | | | US | 2013214136 | A1 | 22-08-2013 |
| US 2014091898 | A1 | | 03-04-2014 | EP | 2713187 | A1 | 02-04-2014 |
| | | | | ES | 2587227 | T3 | 21-10-2016 |
| | | | | US | 2014091898 | A1 | 03-04-2014 |
| US 2013221204 | A1 | | 29-08-2013 | DE | 102012101431 | A1 | 29-08-2013 |
| | | | | EP | 2631682 | A2 | 28-08-2013 |
| | | | | US | 2013221204 | A1 | 29-08-2013 |

EPO FORM P0459

For more details about this annex : see Official Journal of the European Patent Office, No. 12/82

**REFERENCES CITED IN THE DESCRIPTION**

**Patent documents cited in the description**

- CN 203877712 U